# EUROPÄISCHE PATENTSCHRIFT

(11) **EP 3 739 604 B1**
(45) Veröffentlichungstag und Bekanntmachung des Hinweises auf die Patenterteilung: **20.07.2022**
(21) Anmeldenummer: 19174689.0
(22) Anmeldetag: 15.05.2019
(51) Int. Cl.: H01F 41/02, B21D 43/22, B25J 9/16, B21D 43/02

(54) **VERFAHREN ZUM AUTOMATISCHEN STAPELN VON PLATTENFÖRMIGEM STAPELGUT, INSBESONDERE TRANSFORMATORENKERNBLECHEN**
METHOD FOR AUTOMATICALLY STACKING SHEET-SHAPED GOODS, IN PARTICULAR TRANSFORMER CORE SHEETS
PROCÉDÉ D'EMPILEMENT AUTOMATIQUE DE MARCHANDISES À EMPILER EN FORME DE PLAQUE, EN PARTICULIER DE TÔLES DE NOYAU DE TRANSFORMATEUR

(43) Veröffentlichungstag der Anmeldung: 18.11.2020
(73) Patentinhaber: Heinrich Georg GmbH Maschinenfabrik, 57223 Kreuztal (DE)
(72) Erfinder: Wennemer, Matthias, 57462 Olpe (DE)
(74) Vertreter: Moser Götze & Partner Patentanwälte mbB

(56) Entgegenhaltungen:
- EP-A1- 1 480 007
- WO-A1-2018/019387
- CN-A- 106 783 135
- CN-U- 206 740 074
- DE-A1-102014 218 210
- DE-A1-102017 107 215
- DE-B4-112005 002 506
- FR-A1- 2 998 284
- JP-A- H09 106 311
- US-A- 4 744 664

## Beschreibung

Die Erfindung betrifft ein Verfahren zum automatischen Stapeln von plattenförmigem Stapelgut, insbesondere Transformatorenkernblechen, auf einer Unterlage, bei dem Stapelgut, insbesondere geschnittene Bleche, mittels automatisierter Handhabungsmittel, die um mindestens zwei schräg zueinander stehenden Achsen beweglich sind, an einer gewünschten Soll-Position und in einer bestimmten Ausrichtung und Lage auf einem Legetisch abgestapelt werden, insbesondere um einen Transformatorenkern auszubilden, wobei zur Ablage des Stapelguts, insbesondere der Bleche, an der gewünschten Position diese mittels geeigneter Bewegung der Handhabungsmittel in einem Handhabungsmittel-Koordinatensystem zu einer Ist-Position bewegt werden, nach Anspruch 1.

Verfahren zum automatischen Stapeln von Transformatorenkernblechen auf einer Unterlage in einer vorbestimmten räumlichen Anordnung sind bekannt.

So werden beim Herstellen von Transformatorenkernen auf Größe geschnittene Transformatorenkernbleche auf Legetischen manuell oder automatisiert abgestapelt. Dabei ist die möglichst genaue Positionierung der Bleche zueinander wichtig, um den Wirkungsgrad im fertigen Kern zu optimieren.

Aus der EP 1 498 918 B1 ist es zum Halten von abgestapelten Blechen bekannt, in Fädellöchern der Bleche eingreifende Fädelbolzen einzusetzen, um die Position und Orientierung der Bleche festzulegen.

Die WO 2019/030352 A1 offenbart ebenso die Verwendung von Fädelbolzen am Legetisch als Positionierhilfen. An dem Legetisch sind Fädelbolzen und/oder Blechanschläge als Positionierhilfen fest montiert und die Bleche werden an den Fädelbolzen zu dem Transformatorkern zusammengesetzt bzw. gestapelt. Die Bleche weisen insbesondere Bohrungen bzw. Ausschnitte (Fädellöcher) auf, in die die Fädelbolzen eingreifen können. Die Bleche werden mittels der Fädellöcher beim auf die Fädelbolzen Auffädeln lagegenau relativ zueinander positioniert.

Daneben ist es bekannt, das Abstapeln der geschnittenen Bleche für den Transformatorenkern in variabler Weise mittels Mehrachsenroboter vollautomatisch durchzuführen. So ist von der Anmelderin ein System (GEORG precisioncut TBA 400 robotline) bekannt, bei dem ein Roboter mit serieller Kinematik, z.B. Gelenkarmroboter die geschnittenen Bleche auf einem Legetisch mittels Fädelbolzen positioniert.

Daneben sind Systeme bekannt, welche die relative Lage zwischen Handhabungssystem und Blech bei dessen Aufnahme mit einem Sensorsystem erfassen und bei Ablage ggf. korrigieren (CN 106 783 135 A, WO 2018/019387 A1, EP 1 480 007 A1, DE 10 2017 107215 A1, FR 2 998 284 A1). Diese Systeme beruhen darauf, dass eine durch Licht erzeugte Markierung auf dem Blech über bildgebende Verfahren (Kamera) erkannt und ausgewertet wird.

Es hat sich herausgestellt, dass eine weitere Verbesserung der möglichst genauen Positionierung und Ausrichtung der Bleche wünschenswert wäre. Je kleiner der Spalt zwischen den Blechen eingestellt werden kann, desto höher ist der Wirkungsgrad des Transformators. Eine genaue Ablage kann Fädelbolzen überflüssig machen, sodass der Wirkungsgrad weiter gesteigert werden kann.

Insbesondere ist dies bei der Verwendung automatisierter Handhabungsmittel in Gestalt von Mehrachsenkinematiken, wie z.B. Knickarmroboter, zum Legen der Bleche gewünscht. Es ist nämlich besonders schwierig bei diesen Mehrachsenkinematiken, dauerhaft eine genau positionierte Abstapelung der Bleche aufeinander sicherzustellen, da es durch die Bewegungen der vielen Achsen der Mehrachsenkinematiken, deren Veränderungen über die Zeit, Umweltbedingungen usw. unweigerlich zu Positions- und Lageabweichungen kommt.

Daher besteht die Aufgabe der vorliegenden Erfindung darin, ein Verfahren zum automatischen Stapeln von Transformatorenkernblechen auf einer Unterlage in einer vorbestimmten räumlichen Anordnung bereitzustellen, die eine Bestimmung der relativen Abweichungen zwischen Abstapelvorrichtung und Referenzkoordinaten und Verwendung der Abweichungen zur Korrektur ermöglichen.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass wenn zur Bestimmung von Abweichungen der Ist-Position von der gewünschten Soll-Position der Handhabungsmittel ein Referenzkoordinatensystem verwendet wird, zu dem ein Kalibriersystem ausgerichtet wird, das die Bestimmung der Abweichungen der Bewegung der Handhabungsmittel von der Soll-Position erlaubt, es möglich ist, Abweichungen sehr genau und bedarfsweise zu bestimmen.

Somit kann der Stapelvorgang genauer als bisher durchgeführt werden, da es jederzeit ohne weiteres möglich wird, die Bewegungen der Handhabungsmittel zu kalibrieren.

So kann z.B. nach jedem Abstapelvorgang oder auch nur einmal am Tag oder in der Woche etc. eine Kalibrierung durchgeführt werden.

Zudem kann mittels des Kalibriersystems auch eine nicht nur vertikal verlaufende Abstapelung geeicht werden. Es ist möglich, den Laser bzw. den Detektor auch schräg oder winkelig im Raum auszurichten, um beispielsweise eine geneigte Abstapelung der Bleche aufeinander mit hoher Genauigkeit zu erreichen.

Mit anderen Worten, die Erfindung beschreibt ein Verfahren zur relativen Ausrichtung eines Stapelguts bzw. dessen Koordinatensystems an einem Referenzkoordinatensystem beim automatisierten Stapeln. Das Verfahren ermöglicht darüber hinaus die Kompensation oder den Ausgleich von Abweichungen der Handhabungsmittel bzw. deren Achsen zueinander beim Platzieren des Stapelguts.

Als plattenförmiges Stapelgut kommen plattenförmige Teile in Frage. Insbesondere sind dies unbeschichtete oder beschichtete metallische Bleche. Daneben können auch plattenförmige Kunststoffteile oder Glas als Stapelgut Verwendung finden. Besonders bevorzugt ist die Stapelung von Transformatorenkernblechen.

Auch eine abwechselnde Stapelung verschiedener plattenförmiger Stapelgüter ist im Rahmen der Erfindung denkbar.

Besonders genau und zuverlässig ist es nach der Erfindung, wenn das Kalibriersystem einen Laser und einen dazu beabstandet angeordneten Detektor für die Strahlung aufweist, wobei der Laser oder der Detektor an den Handhabungsmitteln angeordnet und das Gegenstück zum Referenzkoordinatensystem ausgerichtet ist, wobei das Kalibriersystem die Position und/oder Ausrichtung des Lasers relativ zum Detektor erfassen kann.

Das Kalibriersystem mit seinem Detektor ist also eingerichtet, um demnach eine Bestimmung der Abweichung der Handhabungsmittel von der Sollposition in mindestens einer Dimension zu ermöglichen, vorzugsweise in der Ebene, die durch X- und Y-Raumrichtungen (nicht die Z-Höhenachse) aufgespannt ist. Möglich ist auch die Hinzunahme der Bestimmung einer Winkelfehlstellung der Handhabungsmittel, wenn der Detektor z.B. eine zweite beabstandete Sensorebene aufweist.

Im Prinzip wird somit das bekannte Messen von Positions- und Lageabweichungen mit Laser und positionsempfindlichen Detektoren, wie z.B. Photodioden, bei Drehachsen und Linearachsen auf ein Mehrachsensystem beim Stapeln übertragen, wie es aus Weck, M.: Werkzeugmaschinen 5: Messtechnische Untersuchung und Beurteilung, dynamische Stabilität, Ausgabe 7, Springer-Verlag, 2006, Seiten 127 - 130 & 142 - 148, bekannt ist.

Das Wandern des Laserpunktes auf dem Detektor erlaubt also die Bestimmung der Positions- und Lageabweichungen.

Bevorzugt ist es, wenn der Detektor in Teilen oder im Ganzen dem Handhabungsmitteln zugeordnet ist. Dann kann sich dieser mit den Handhabungsmitteln bewegen und der Laser kann stationär platziert und ausgerichtet werden. Sinnvollerweise ist die Ausrichtung des Lasers exakt senkrecht vertikal. Der Laser kann dabei zu dem Referenzkoordinatensystem in Teilen oder im Ganzen ausgerichtet werden.

Der Detektor kann ein-, zwei- oder mehrdimensional ausgeführt sein. Bevorzugt ist der Einsatz eines zweidimensionalen Flächendetektors, wie einer flächigen Fotodiodenanordnung. Auch denkbar ist der Einsatz quer zu einander, insbesondere kreuzförmig, angeordnete eindimensionale "lineare" Detektoren. Der Detektor kann also auch eine Gruppierung bzw. Anordnung ein oder mehrerer Einzeldetektoren sein, die z.B. über Spiegel gekoppelt sind.

Die Ausrichtung des Lasers relativ zum Detektor kann durch ein oder mehrere ein- oder mehrdimensionale Detektoren und/oder Spiegelanordnungen erfasst werden, um z.B. eine Bestimmung der oben angegebenen Winkelfehlstellung durch eine beabstandete zweite Sensorebene zu ermöglichen.

Die Ausrichtung des Lasers muss nicht stationär, sondern kann beweglich ausgeführt sein, insbesondere durch eine Nivellierung anhand der Gravitation. Es kann sich z.B. um eine durch Gravitation selbstausrichtende Anordnung handeln.

Die Bestimmung der relativen Abweichungen der Bewegung der Handhabungsmittel kann für eine Berechnung von Kompensations- und/oder Ausgleichsbewegungen verwendet werden, so dass die gemessenen Abweichungen der Ist- von der gewünschten Soll-Position zumindest vermindert, wenn nicht sogar unter eine vorgegebene Toleranzgrenze gedrückt werden.

Dazu können einerseits die Abweichungen zwischen Ist- und Soll-Position durch Aufnahme von Messwerten zu den Veränderungen zwischen dem zu dem Referenzkoordinatensystem ausgerichteten Laser und Detektor am Handhabungsmittel beim Ablegen des Stapelguts bestimmt werden. Andererseits kann die Messung auch vor dem Ablegen mit oder ohne Blech (Kalibrierungsschritt) durchgeführt werden. Anschließend werden eine bestimmte Anzahl von Stapelgütern (z.B. Bleche) gestapelt.

Wann eine Wiederholmessung erforderlich ist, hängt von den Randbedingungen (z.B. Temperatur usw.) ab.

Das erfindungsgemäße Verfahren kann durch die Verwendung von einem oder mehreren Lasern, einem oder mehreren Detektoren, einer oder mehreren Nivelliervorrichtungen für die Laser sowie einer oder mehreren Mehrachskinematiken für Kompensations- und/oder Ausgleichsbewegungen der Handhabungsmittel durchgeführt werden. Dabei sind die Systeme und deren Teilsysteme ortsunabhängig. Die Mehrachskinematik kann aufgeteilt und deren Teilsysteme der Laser-Quelle oder dem Detektor zugeordnet werden, d.h. die Teilsysteme besitzen eine kinematische Beziehung zu diesen. Ein Gesamtsystem kann aus mehreren dieser Subsysteme bestehen.

Anders gesagt, ermöglicht das erfindungsgemäße Verfahren eine genaue Ausrichtung und Positionierung eines Stapelguts (z.B. Transformatorenkernblech) bzw. dessen Koordinatensystems an einem Referenzkoordinatensystem. Das Referenzkoordinatensystem bzw. dessen Lage wird vorbestimmt oder durch ein übergeordnetes System festgelegt bzw. vorgegeben. Das Stapelgut oder die Mehrachskinematik kann ebenfalls das Referenzkoordinatensystem abbilden.

Der Laser-Strahl wird zu diesem gewählten Referenzkoordinatensystem in Teilen oder im Ganzen ausgerichtet. Möglich ist auch eine nur teilweise Ausrichtung des Strahls, d.h. in nur einer Ebene, wenn z.B. nur eine Abweichungsrichtung interessant ist.

Die Ausrichtung muss nicht zwangsweise starr, sondern kann in Teilen oder im Ganzen beweglich ausgeführt werden. Es kann z. B. eine Selbstausrichtung anhand der Gravitation erfolgen, wodurch das aktuelle Gravitationsfeld zum Referenzsystem wird.

Das Verfahren ermöglicht so die Aufnahme (Bestimmung) der relativen Abweichung der Mehrachskinematik zwischen Laser-Koordinatensystem und Detektorkoordinatensystem bzw. der zugehörigen Bahngenauigkeiten.

Die aufgenommen bzw. aus den Messwerten berechneten Abweichungen werden für Kompensations- und/oder Ausgleichsbewegungen verwendet, indem deren Inverse durch die beliebige Mehrachskinematik umgesetzt wird. Abweichungen von der idealen Bahn können so kompensiert werden.

In der entsprechenden Messposition erfolgt optional eine Ansteuerung der Handhabungsmittel zur Ausführung einer zielgerichteten, z.B. möglichst senkrechten, Bewegung und diese Bewegung wird dabei vom Detektor nachverfolgt. Somit ist nachverfolgbar, ob die gewünschte zielgerichtete Bewegung auch eingehalten wird und wenn nicht, können Kompensationsbewegungen berechnet werden, um die Handhabungsmittel entsprechend anzusteuern.

Es können ein oder mehrere Komponenten im Raum verteilt angewendet werden, um lokal unterschiedliche Abweichungen abbilden und kompensieren zu können.

Die einzelnen kinematischen Beziehungen zwischen Laser und Detektor zum Referenzkoordinatensystem und Stapelgut (Bleche) sind beliebig und können in Teilen oder im Ganzen getauscht werden. So kann beispielsweise eine Achse der Mehrachskinematik auch der Laser-Quelle zugeordnet sein.

Als Nivelliervorrichtung ist eine Ausrichtung des Laser-Strahls zu einer Referenzgeometrie (z. B. maßgenaue Halterung), eine manuelle oder automatische Kinematik mit oder ohne Sensorsystem oder eine Kombination dieser Möglichkeiten zu verstehen. Wahlweise kann die momentane Ausrichtung des Laser-Strahls durch beliebige Anzeigeelemente angezeigt werden.

Als Handhabungsmittel kommen insbesondere Mehrachskinematiken in Frage. Diese verfügen neben mindestens einer Hauptachse über mindestens eine weitere Achse und sind explizit nicht auf zwei- oder dreiachsige Anordnungen beschränkt, sondern umfassen auch Mehrachsensysteme, wie z. B. Roboterkinematiken.

Eine Mehrachskinematik ermöglicht relative Bewegungen zwischen dem ReferenzKoordinatensystem und dem Detektor. Die Mehrachskinematik kann aufgeteilt und dessen Teilsysteme dem Laser oder dem Detektor zugeordnet werden, d.h. die Teilsysteme besitzen eine kinematische Beziehung zu diesen.

Die Mehrachskinematik kann aus mehreren Subsystemen bestehen. Die Achsen der Mehrachskinematik können linear, rotatorisch oder als Kombination dieser ausgeführt werden.

Die Erfindung eignet sich insbesondere für die Anwendung beim Herstellen von Transformatorenkernen, durch automatisiertes Abstapeln von auf Größe geschnittenen Transformatorenkernblechen auf Legetischen. Dann sind die Handhabungsmittel vorzugsweise Roboter mit seriellen Kinematiken zur Handhabung der Bleche.

Weitere Details der Erfindung ergeben sich aus der nachfolgenden Beschreibung von Ausführungsbeispielen anhand der Zeichnung, in der

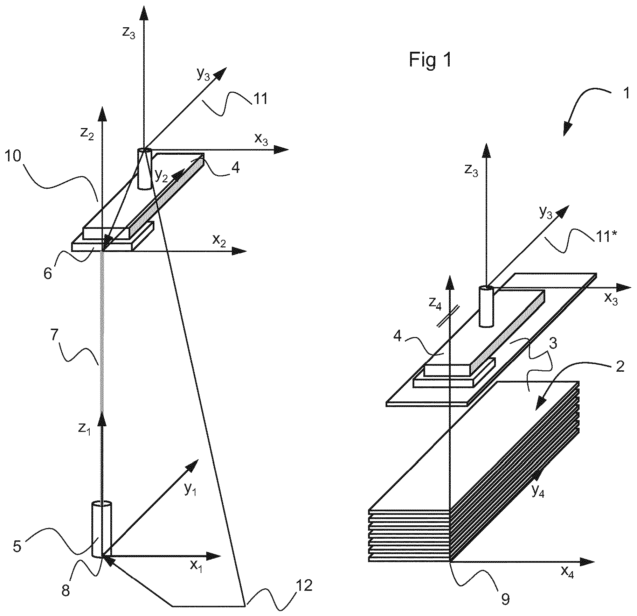

Fig. 1 eine schematische perspektivische Ansicht einer generischen Anordnung zum Stapeln von Transformatorenkernblechen zeigt, in der die unterschiedlichen Koordinatensysteme zur Veranschaulichung eingezeichnet sind.

In der Figur ist eine als Ganzes mit 1 bezeichnete Anlage zum Stapeln von Transformatorenkernblechen gezeigt.

Die einzelnen Transformatorenkernbleche 3 werden darin zu einem Stapel 2 auf einer Unterlage automatisiert abgelegt, um später einen Transformatorenkern daraus herzustellen. Es versteht sich, dass parallel mehrere Stapel 2 "bearbeitet" werden können bzw. der gezeigte Stapel 2 sinnbildlich für den gesamten Transformatorenkern steht.

Dazu werden - wie in der rechten Hälfte der Figur veranschaulicht - die zugeführten geschnittenen Bleche 3 mittels automatisierter Handhabungsmittel, von denen nur der Greifer 4 gezeigt ist und die über mehrere quer und schräg zueinanderstehenden Achsen beweglich sind, nacheinander auf einem Legetisch als Stapel 2 in einem Stapel-Koordinatensystem 9 (X2, Y2, Z2) abgestapelt.

Gewünscht ist dabei die Ablage der Bleche 3 an einer gewünschten Soll-Position in dem Stapel-Koordinatensystem 9 (X2, Y2, Z2) und in einer bestimmten Ausrichtung und Lage auf dem Legetisch.

Beim Auftreten von Abweichungen der Handhabungsmittel, erfolgt die Ablage durch den Greifer 4 allerdings an einer von der Soll-Position abweichenden Ist-Position, also an abweichenden Koordinaten, wenn die Handhabungsmittel sich z.B. durch Umwelteinflüsse verstellen bzw. dejustieren.

Zur Bestimmung (und somit zur späteren Korrektur) dieser Abweichungen der Ist-Position von der gewünschten Soll-Position wird vorliegend ein Kalibriersystem eingesetzt, das, vereinfacht dargestellt, einen Laser 5 mit Laserstrahl 7 und einer flächigen Fotodiodenanordnung 6 als Detektor umfasst.

Der Laser 5 ist an einem Laser-Koordinatensystem 8 (X1,Y1,Z1) angeordnet sowie ausgerichtet, das gleichzeitig als Referenzkoordinatensystem dient, zu dem somit einerseits der Laser 5 festgelegt ist und andererseits die Abstapelposition sowie auch die Handhabungsmittel bzw. der Greifer 4 in der Messstellung in Beziehung 12 stehen.

Der Detektor bzw. die flächigen Fotodiodenanordnung 6 ist so am Greifer 4 angeordnet, dass der Laserstrahl 7 auf diese auftreffen kann.

Wird also der Greifer 4 zur Kalibrierungseinleitung in einem gesonderten Kalibrierungsschritt - wie in der linken Hälfte der Figur veranschaulicht - in eine Stellung oberhalb des Lasers 5 bzw. dessen Strahl 7 verfahren, so trifft der Laserstrahl 7 an einer Stelle auf dem Detektor 6 auf.

Aus der erwarteten Auftrittsstelle am Detektor (ohne Abweichung) und der realen Auftrittsstelle bzw. in dessen Detektor-Koordinatensystem 10 (ggf. mit Abweichungen) können so eine Bestimmung der Abweichungen der Bewegung der Handhabungsmittel im Handhabungs-Koordinatensystem 11 (durch den Greifer 4 repräsentierte) von der erwarteten Soll-Position errechnet werden.

Somit kann über die Lage des Greifers 4 bzw. dessen Handhabungs-Koordinatensystem 11 in der Messposition eine Korrektur bzw. Anpassung der Handhabungsmittelbewegungen errechnet werden, so dass diese bei der Ablage von Transformatorenkernbleche im Handhabungs-Koordinatensystem 11* keine oder nur noch geringste Abweichungen aufweisen.

Zusätzlich kann der Greifer 4 in der Messposition über eine Ansteuerung der Handhabungsmittel zur Ausführung einer möglichst senkrechten Bewegung angesteuert werden und diese Bewegung von Detektor nachverfolgt werden. Somit ist nachverfolgbar, ob die gewünschte senkrechte Bewegung auch eingehalten wird und wenn nicht Kompensationsbewegungen berechnet werden können.

### Bezugszeichenliste

- 1: Anlage zum Stapeln von Transformatorenkernblechen
- 2: Stapel
- 3: Blech
- 4: Greifer
- 5: Laser
- 6: Detektor
- 7: Laserstrahl
- 8: Laser-Koordinatensystem bzw. Referenzkoordinatensystem
- 9: Stapel-Koordinatensystem
- 10: Detektor-Koordinatensystem
- 11: Handhabungsmittel-Koordinatensystem
- 12: Beziehung

## Patentansprüche

1. Verfahren zum automatischen Stapeln von plattenförmigem Stapelgut, insbesondere Transformatorenkernblechen, auf einer Unterlage, bei dem Stapelgut, insbesondere geschnittene Bleche (3), mittels automatisierter Handhabungsmittel (4), die um mindestens zwei schräg zueinander stehenden Achsen beweglich sind, an einer gewünschten Soll-Position und in einer bestimmten Ausrichtung und Lage auf einem Legetisch abgestapelt werden, insbesondere um einen Transformatorenkern auszubilden, wobei zur Ablage des Stapelguts, insbesondere der Bleche (3), an der gewünschten Position diese mittels geeigneter Bewegung der Handhabungsmittel (4) in einem Handhabungsmittel-Koordinatensystem (11) zu einer Ist-Position auf dem Legetisch bewegt werden,
wobei zur Bestimmung von Abweichungen einer Ist-Position von einer gewünschten Soll-Position der Handhabungsmittel ein Referenzkoordinatensystem (8) verwendet wird, zu dem ein Kalibriersystem ausgerichtet wird, das die Bestimmung der Abweichungen der Bewegung der Handhabungsmittel von ihrer Soll-Position erlaubt, und wobei das Kalibriersystem einen Laser (5), der einen Laserstrahl (7) erzeugt und einen dazu beabstandet angeordneten Detektor (6) für die Strahlung aufweist, wobei der Laser (5) oder der Detektor (6) an den Handhabungsmitteln (4) angeordnet und das Gegenstück zum Referenzkoordinatensystem (8) ausgerichtet ist, wobei das Kalibriersystem die Position und/oder Ausrichtung des Lasers (5) relativ zum Detektor (6) in mindestens zwei Dimensionen erfassen kann, **dadurch gekennzeichnet, dass** der Detektor (6) so ausgerichtet ist, dass der Laserstrahl (7) auf diesen auftreffen kann und dass zur Bestimmung der Abweichungen der Ist-Position von der gewünschten Soll-Position der Handhabungsmittel die Auftrittsstelle des Laserstrahls (7) auf den Detektor (6) ermittelt und mit der erwarteten Auftrittsstelle am Detektor (6) verglichen wird.

2. Verfahren nach Anspruch 1, **dadurch gekennzeichnet, dass** der Detektor (6) in Teilen oder im Ganzen dem Handhabungsmitteln (4) zugeordnet ist.

3. Verfahren nach Anspruch 1 oder 2, **dadurch gekennzeichnet, dass** der Detektor (6) ein-, zwei- oder mehrdimensional ausgeführt ist.

4. Verfahren nach einem der Ansprüche 1 bis 3, **dadurch gekennzeichnet, dass** der Detektor (6) durch einen oder mehrere ein- oder mehrdimensionale Detektoren und/ oder Spiegel- und/oder Linsensysteme ausgebildet ist.

5. Verfahren nach einem der Ansprüche 1 bis 3, **dadurch gekennzeichnet, dass** die Ausrichtung des Lasers (5) relativ zum Detektor (6) durch einen oder mehrere ein- oder mehrdimensionale Detektoren und/oder Spiegel- und/oder Linsensysteme erfasst wird.

6. Verfahren nach einem der Ansprüche 1 bis 5, **dadurch gekennzeichnet, dass** der Laser (5) oder der Detektor (6) zu dem Referenzkoordinatensystem (8) in Teilen oder im Ganzen ausgerichtet wird.

7. Verfahren nach einem der vorhergehenden Ansprüche, **dadurch gekennzeichnet, dass** basierend auf der Bestimmung der Abweichung der Bewegung der Handhabungsmittel (4) von ihrer Soll-Position eine Berechnung von Kompensations- und/oder Ausgleichsbewegungen der Handhabungsmittel durchgeführt wird.

8. Verfahren nach Anspruch 7, **dadurch gekennzeichnet, dass** die Positions- und Lageabweichungen der Handhabungsmittel (4) zwischen ihrer Ist- und Soll-Position durch Aufnahme von Messwerten zu den Veränderungen zwischen dem zu dem Referenzkoordinatensystem (8) ausgerichteten Laser (5) und Detektor (6) am Handhabungsmittel beim Ablegen des Stapelguts oder in einem gesonderten Kalibrierungsschritt bestimmt werden.

## Claims

1. Method for automatically stacking planar goods to be stacked, in particular transformer core plates, on a substrate, wherein goods to be stacked, in particular cut plates (3), are stacked using automated handling means (4), which can move about at least two axes inclined with respect to each other, at a desired target position and in a specific orientation and location on a placement table, in particular in order to form a transformer core, wherein for placement of the goods to be stacked, in particular the plates (3), at the desired position they are moved by a suitable movement of the handling means (4) in a handling means coordinate system (11) to an actual position on the placement table, wherein, in order to determine deviations of an actual position from a desired target position of the handling means, a reference coordinate system (8) is used, with respect to which a calibration system is orientated which permits determination of the deviations of the movement of the handling means from their target position, and wherein the calibration system comprises a laser (5), which generates a laser beam (7), and comprises a detector (6), disposed at a distance therefrom, for the radiation, wherein the laser (5) or the detector (6) is disposed on the handling means (4) and the counterpart is orientated with respect to the reference coordinate system (8), wherein the calibration system can detect the position and/or orientation of the laser (5) relative to the detector (6) in at least two dimensions, **characterised in that** the detector (6) is orientated in such a way that the laser beam (7) can be incident on it and that, in order to determine the deviations of the actual position from the desired target position of the handling means, the incident point of the laser beam (7) on the detector (6) is ascertained and compared with the expected incident point on the detector (6).

2. Method as claimed in claim 1, **characterised in that** the detector (6) is partially or wholly allocated to the handling means (4).

3. Method as claimed in claim 1 or 2, **characterised in that** the detector (6) is designed to be one-dimensional, two-dimensional or multi-dimensional.

4. Method as claimed in any one of claims 1 to 3, **characterised in that** the detector (6) is formed by one or more one-dimensional or multi-dimensional detectors and/or mirror and/or lens systems.

5. Method as claimed in any one of claims 1 to 3, **characterised in that** the orientation of the laser (5) relative to the detector (6) is detected by one or more one-dimensional or multi-dimensional detectors and/or mirror and/or lens systems.

6. Method as claimed in any one of claims 1 to 5, **characterised in that** the laser (5) or the detector (6) is partially or wholly orientated with respect to the reference coordinate system (8).

7. Method as claimed in any one of the preceding claims, **characterised in that**, on the basis of the determination of the deviation of the movement of the handling means (4) from their target position, a calculation of compensation and/or equalising movements of the handling means is carried out.

8. Method as claimed in claim 7, **characterised in that** the position and location deviations of the handling means (4) between their actual and target positions are determined by the taking of measurement values relating to the changes between the laser (5), orientated with respect to the reference coordinate system (8), and detector (6) on the handling means during placement of the goods to be stacked or in a separate calibration step.

## Revendications

1. Procédé d'empilement automatique de produits à empiler en forme de plaque, en particulier de tôles de noyau de transformateur, sur une base, procédé dans lequel des produits à empiler, en particulier des tôles (3) découpées, sont empilés sur une table de réception à une position cible souhaitée, à l'aide de moyens de manutention (4) automatisés qui sont mobiles autour d'au moins deux axes inclinés l'un par rapport à l'autre, dans une position et une orientation déterminées, notamment pour former un noyau de transformateur, afin de déposer les produits à empiler, en particulier les tôles (3), à la position souhaitée, ceux-ci étant déplacées vers une position réelle sur la table de réception par un déplacement approprié des moyens de manutention (4) dans un système de coordonnées de moyens de manutention (11), un système de coordonnées de référence (8) étant utilisé pour déterminer des écarts entre une position réelle et une position cible souhaitée des moyens de manutention, système de coordonnées de référence par rapport auquel un système d'étalonnage est orienté qui permet de déterminer les écarts du mouvement des moyens de manutention depuis leur position cible, et le système d'étalonnage comportant un laser (5) qui génère un faisceau laser (7) et un détecteur (6) qui est disposé à distance dudit laser et qui est destiné au rayonnement, le laser (5) ou le détecteur (6) étant disposé sur les moyens de manutention (4) et la contre-pièce étant orientée par rapport au système de coordonnées de référence (8), le système d'étalonnage pouvant détecter la position et/ou l'orientation du laser (5) par rapport au détecteur (6) dans au moins deux dimensions, **caractérisé en ce que** le détecteur (6) est orienté de telle sorte que le faisceau laser (7) puisse être incident à celui-ci et **en ce que** le point d'incidence du faisceau laser (7) sur le détecteur (6) est déterminé et comparé avec le point d'incidence attendu sur le détecteur (6) afin de déterminer les écarts entre la position réelle et la position cible souhaitée des moyens de manutention.

2. Procédé selon la revendication 1, **caractérisé en ce que** le détecteur (6) est associé en partie ou en totalité aux moyens de manutention (4).

3. Procédé selon la revendication 1 ou 2, **caractérisé en ce que** le détecteur (6) est conçu en une, deux ou plusieurs dimensions.

4. Procédé selon l'une des revendications 1 à 3, **caractérisé en ce que** le détecteur (6) est formé par un ou plusieurs détecteurs unidimensionnels ou multidimensionnels et/ou des systèmes de miroirs et/ou de lentilles.

5. Procédé selon l'une des revendications 1 à 3, **caractérisé en ce que** l'orientation du laser (5) par rapport au détecteur (6) est détecté par un ou plusieurs détecteurs unidimensionnels ou multidimensionnels et/ou des systèmes de miroirs et/ou de lentilles.

6. Procédé selon l'une des revendications 1 à 5, **caractérisé en ce que** le laser (5) ou le détecteur (6) est orienté en partie ou en totalité par rapport au système de coordonnées de référence (8).

7. Procédé selon l'une des revendications précédentes, **caractérisé en ce qu'**un calcul de mouvements de compensation et/ou d'équilibrage des moyens de manutention est effectué sur la base de la détermination de l'écart du mouvement des moyens de manutention (4) par rapport à leur position cible.

8. Procédé selon la revendication 7, **caractérisé en ce que** les écarts de position et de localisation des moyens de manutention (4) entre leur position réelle et leur position cible sont déterminés lors de la pose des produits à empiler ou lors d'une étape d'étalonnage séparée par acquisition de valeurs de mesure relatives aux changements entre le laser (5) orienté par rapport au système de coordonnées de référence (8) et le détecteur (6) sur les moyens de manutention.
